# EUROPÄISCHE PATENTSCHRIFT

(11) **EP 2 987 231 B1**
(45) Veröffentlichungstag und Bekanntmachung des Hinweises auf die Patenterteilung: **03.04.2019**
(21) Anmeldenummer: 14718379.2
(22) Anmeldetag: 15.04.2014
(51) Int. Cl.: H02M 3/07, H02M 3/335

(54) **SCHALTUNGSANORDNUNG ZUR ÜBERTRAGUNG VON ENERGIE**
CIRCUIT ASSEMBLY FOR TRANSFERRING ENERGY
AGENCEMENT DE CIRCUIT DE TRANSPORT D'ÉNERGIE

(30) Priorität: 16.04.2013 DE 102013206765
(43) Veröffentlichungstag der Anmeldung: 24.02.2016
(73) Patentinhaber: Bayerische Motoren Werke Aktiengesellschaft, 80809 München (DE)
(72) Erfinder: VÖLKEL, Holger, 80686 München (DE); EPP, Christian, 86956 Schongau (DE); MAYR, Roman, 82205 Gilching (DE); SCHULZ, Michael, 81827 München (DE); WAHL, Michael, 57074 Siegen (DE); BRÜCK, Rainer, 59558 Lippstadt (DE)
(86) Internationale Anmeldenummer: PCT/EP2014/057641
(87) Internationale Veröffentlichungsnummer: WO 2014/170334

(56) Entgegenhaltungen:
- EP-A1- 0 386 261
- DE-A1- 19 631 356
- JP-A- S5 858 863
- JP-A- 2011 223 668
- US-A- 5 345 376

## Beschreibung

Die Erfindung betrifft eine Schaltungsanordnung zur Übertragung von Energie.

Um zwei Schaltkreise galvanisch voneinander zu trennen, ist es bekannt, diese über einen Transformator zu koppeln. Eine Energieübertragung erfolgt hier im Wechselspannungsbetrieb. Stellt eine Energiequelle lediglich eine Gleichspannung zur Verfügung, so ist auf der Primärseite eine Umrichterschaltung vorzusehen, welche die Gleichspannung in Wechselspannung wandelt. In entsprechender Weise ist es erforderlich, auf der Sekundärseite die Wechselspannung in eine Gleichspannung zu wandeln, wenn ein Verbraucher mit Gleichspannung zu betreiben ist. Das Vorsehen des Transformators und der eventuell notwendigen Wandlereinrichtungen ist mit einem hohen Bauraumbedarf verbunden. Alternativ kann eine galvanische Trennung zweier Schaltkreise durch ein primärgetaktetes Schaltnetzteil mit einem sog. Trennübertrager erfolgen. Auch dieser benötigt einen Verhältnismäßig großen Bauraum.

Beide Varianten erfordern einen hohen Schaltungsaufwand, woraus in der Folge teurer Platzbedarf erforderlich ist. Ebenso resultiert aus den bekannten Bauweisen ein hohes Gewicht. Ein weiterer Nachteil besteht darin, dass die Energieübertragung in beiden Fällen frequenzlimitiert ist.

Die Druckschrift DE 196 31 356 A1 offenbart eine Schaltanordnung zur Übertragung von Energie, wobei eine elektrische Potentialtrennung des Netzes, in dem der Verbraucher befindlich ist, von dem Versorgungsnetz erfolgt.

Es ist Aufgabe der vorliegenden Erfindung, eine Mehrzahl von Verbrauchern kontinuierlich, mit jeweils unterschiedlicher Spannung und/oder unterschiedlichem Strom unter jeweiliger steter galvanischer Trennung von der Energiequelle betreiben zu können.

Diese Aufgabe wird gelöst durch eine Schaltungsanordnung zur Übertragung von Energie gemäß den Merkmalen des Patentanspruches 1. Vorteilhafte Ausgestaltungen ergeben sich aus den abhängigen Patentansprüchen.

Die Schaltungsanordnung zur Übertragung von Energie umfasst eine Energiequelle, eine Steuereinrichtung, zumindest ein Grundelement und zumindest zwei oder mehrere Energieverteilnetze. Jedes Energieverteilnetz umfasst ein Grundelement und zumindest ein Lastelement. Das Grundelement umfasst einen ersten Zwischenkreisenergiespeicher, der zur Ausbildung eines ersten Energiekreises über zwei erste steuerbare Schaltelemente durch die Steuereinrichtung mit der Energiequelle elektrisch verbindbar oder von dieser trennbar ist. Das zumindest eine Lastelement umfasst einen Energieverbraucher, der zur Ausbildung eines zweiten Energiekreises über zwei zweite steuerbare Schaltelemente durch die Steuereinrichtung mit den Anschlüssen des ersten Zwischenkreisenergiespeichers elektrisch verbindbar oder von diesem trennbar ist. Die Steuereinrichtung ist dazu ausgebildet, die ersten und zweiten Schaltelemente des jeweiligen Energieverteilnetzes derart anzusteuern, dass Energie von der Energiequelle zu dem Energieverbraucher, oder umgekehrt, übertragen wird, wobei zu keinem Zeitpunkt eine direkte leitende Verbindung zwischen der Energiequelle und dem Energieverbraucher besteht.

Hierdurch ist es möglich, Spannung oder Strom zwischen der Energiequelle und dem Verbraucher wahlfrei zueinander zu wandeln. Dabei ist durch die Schaltungsanordnung sichergestellt, dass die zwei elektrischen Energiekreise und damit die Verbindung zwischen Energieverbraucher und der Energiequelle zu jedem Zeitpunkt galvanisch voneinander getrennt ist. Die Energieübertragung basiert hierbei auf mehreren Zwischenkreisenergiespeichern, welche gemäß der erfindungsgemäßen Verschaltung keinen Transformator darstellen. Ein Vorteil dieser Schaltungsanordnung besteht darin, dass diese gegenüber einem Transformator oder einem primär-getakteten Schaltnetzteil ein geringeres Gewicht und einen reduzierten Platzbedarf aufweist. Insbesondere kann die Schaltungsanordnung mit geringer Bauhöhe und geringem Volumen hergestellt werden. Hierdurch ergeben sich Kostenvorteile. Darüber hinaus kann die Schaltungsanordnung auch bei hoher Schaltfrequenz betrieben werden. Ein Transformator ist typischerweise auf 200 kHz begrenzt. Die vorgeschlagene Anordnung lässt sich mit Frequenzen im höheren Megahertzbereich betreiben.

Die Energieverteilnetze weisen zumindest ein Zwischenelement auf, welches oder welche zwischen dem Grundelement und dem zumindest einen Lastelement verschaltet sind. Jedes Zwischenelement umfasst einen zweiten Zwischenkreisenergiespeicher, wobei jeder zweite Zwischenkreisenergiespeicher zur Ausbildung eines jeweiligen zweiten Energiekreises über zwei dritte steuerbare Schaltelemente durch die Steuereinrichtung mit den beiden Anschlüssen des jeweils vorhergehenden ersten oder zweiten Zwischenkreisenergiespeichers oder mit dem jeweils nachfolgenden zweiten Zwischenkreisenergiespeicher oder dem zumindest einen Energieverbraucher elektrisch verbindbar oder von diesem trennbar ist. Hierdurch lässt sich eine Kette aus Energiekreisen zwischen der Energiequelle und dem Verbraucher bilden, entlang der sich Energiepakete galvanisch getrennt von der Energiequelle und dem Verbraucher transportieren lassen.

Die Zwischenelemente sind parallel an das Grundelement oder ein vorhergehendes Zwischenelement angeschlossen. Es ist alternativ oder zusätzlich möglich, zwei oder mehr Lastelemente parallel an das Grundelement oder an eines der Zwischenelemente anzuschließen. Das Vorsehen zumindest eines Zwischenelements weist gegenüber dem direkten Anschluss des Lastelements an das Grundelement den Vorteil auf, dass der Verbraucher eines Lastelements kontinuierlich mit Energie versorgt werden kann.

Durch das Vorsehen eines oder mehrerer Zwischenelemente kann darüber hinaus ein beliebiges Energieverteilnetzwerk gebildet werden, so sich aus der Energiequelle eine Mehrzahl an Verbrauchern mit Energie versorgen lässt.

Die Energiequelle kann wahlweise als Strom- oder als Spannungsquelle ausgebildet sein.

Gemäß einer weiteren zweckmäßigen Ausgestaltung kann dem ersten Zwischenkreisenergiespeicher, wenn als Induktivität ausgeprägt, ein Schaltelement parallel geschaltet sein. Beim Vorhandensein von Zwischenelementen kann auch zumindest einem der zweiten Zwischenkreisenergiespeichern ein jeweiliges Schaltelement parallel geschaltet sein. Durch dieses parallele Schaltelement zu den Energiespeichern, entsprechend angesteuert, werden bei der Weitergabe der Energiepakete Spannungsspitzen reduziert und die Energiebilanz optimiert.

Eine weitere Variante der Schaltungsanordnung sieht vor, dass zumindest zwei Energieverteilnetze parallel mit der Energiequelle verschaltet sind. Beispielsweise können die in den Energieverteilnetzen bereit gestellten Spannungen und/oder Ströme zur Versorgung unterschiedlicher Verbraucher unterschiedlich hoch sein.

Beim Vorsehen mehrerer, parallel geschalteter Energieversorgungsnetze ist es zweckmäßig, wenn die ersten Zwischenkreisenergiespeicher der Grundelemente der zumindest zwei Energieverteilnetze zu unterschiedlichen Zeitpunkten mit der Energiequelle elektrisch verbunden sind. Ein Vorteil besteht darin, dass die Energiequelle hierdurch gleichmäßig belastet werden kann. Wenn zu einem bestimmten Zeitpunkt Energie in ein erstes Energieverteilnetz eingespeist wird, trennt das jeweilige Grundelement des oder der weiteren Energieverteilnetze die elektrische Verbindung zu der Energiequelle. Ist das erste Energieverteilnetz dann von der Energiequelle getrennt, so dass das im Grundelement gespeicherte Energiepaket an den nächsten Energiekreis transportiert werden kann, so wird das nächste Energieverteilnetz (d.h. dessen Grundelement) mit der Energiequelle verbunden, usw.

Gemäß einer weiteren zweckmäßigen Ausgestaltung ist die Steuereinrichtung dazu ausgebildet, die Verbindung zwischen der Energiequelle und dem Energieverbraucher durch selektive Ansteuerung der Schalterpaare des Grundelements, des optionalen Zwischenelements und des Lastelements im Betrieb derart leitend und sperrend zu schalten, dass zu jedem gegebenen Zeitpunkt mindestens eines der Schalterpaare sperrt. Hierdurch ist die galvanische Trennung zwischen der Energiequelle und dem Verbraucher zu jedem Zeitpunkt sichergestellt. Die galvanische Trennung wird somit alleine durch die steuerbaren Schaltelemente ermöglicht.

In einer weiteren Ausgestaltung ist die Steuereinrichtung dazu ausgebildet, die Verbindung zwischen der Energiequelle und dem Energieverbraucher durch selektive Ansteuerung der Schalterpaare des Grundelements, des optionalen Zwischenelements und des Lastelements derart leitend und sperrend zu schalten, dass ein Energiepaket von der Energiequelle über den ersten Zwischenkreisspeicher und den oder die optionalen zweiten Zwischenkreisspeicher an den Energieverbraucher, oder umgekehrt, übertragbar ist. Hierdurch wird trotz galvanischer Trennung zwischen der Energiequelle und dem Verbraucher die Versorgung des Verbrauchers mit Energie sichergestellt.

Gemäß einer weiteren Ausgestaltung kann durch dynamische Anpassung der Ansteuerung der Schalterpaare des Grundelements, des optionalen Zwischenelements und des Lastelements durch die Steuereinrichtung die Richtung des Energietransports zwischen den Energiekreisen beliebig umgekehrt werden. Dies ist beispielsweise beim Einsatz der Schaltungsanordnung in einem Fahrzeug von Bedeutung, wenn der Verbraucher in der Lage ist zu rekuperieren. Die dabei gewonnene Energie kann dann - durch entsprechende Ansteuerung der jeweiligen Schalterpaare - von dem Lastelement über ein oder mehrere optionale Zwischenelement und über das Grundelement an die Energiequelle, z.B. einen Akkumulator, die dann in diesem Betrieb eine Energiesenke darstellt, übertragen werden.

Der erste Zwischenkreisenergiespeicher und/oder der zumindest eine zweite, optionale Zwischenkreisenergiespeicher eines jeweiligen Zwischenelements umfassen gemäß einer weiteren Ausgestaltung jeweils zumindest eine Induktivität und/oder einen Kondensator, wodurch bei entsprechende Ansteuerung der Schaltelemente sequentiell jeder Zwischenkreisenergiespeicher des folgenden Energiekreises geladen und entladen werden kann bis der Energieverbraucher mit Energie versorgt ist. Dieses Prinzip kann, wie erläutert, auch in umgekehrter Richtung angewandt werden.

Das Lastelement kann zusätzlich zu dem Energieverbraucher zumindest einen Energiespeicher umfassen. Weist das Lastelement, wie in seiner Grundform, lediglich einen Energieverbraucher auf, so kann dieser auch lückend mit Energie versorgt werden. Durch den Energiespeicher im Lastelement ist es demgegenüber möglich, den Energieverbraucher kontinuierlich mit Energie zu versorgen.

Der Energiespeicher des Lastelements kann in einer Variante eine Induktivität sein, die in Reihe mit dem Verbraucher verschaltet ist, wobei die Reihenschaltung aus der Energiespeicherinduktivität und dem Verbraucher parallel zu einem vierten Schaltelement verschaltet ist. In einer anderen Variante kann der Energiespeicher des Lastelements ein Ladungsspeicher sein, der parallel zu dem Verbraucher verschaltet ist.

Der Energiespeicher kann auch durch eine Kombination aus einer oder mehreren Induktivitäten und einem oder mehreren Ladungsspeichern gebildet sein.

Sind die steuerbaren Schaltelemente des vorherigen Energiekreises (entweder des Grundelements oder eines Zwischenelements) geschlossen, so kann die in dem betreffenden Zwischenkreisenergiespeicher enthaltene Energie an den Energiespeicher des Lastelements abgegeben werden. Aus diesem Energiespeicher wird dann der Verbraucher versorgt.

Gemäß einer weiteren Ausgestaltung sind die ersten und die zweiten Schaltelemente Halbleiterschaltelemente. Insbesondere handelt es sich um MOSFETs (Metal Oxide Semiconductor Field-Effect Transistor) oder HEMTs (High-Electron-Mobility Transistor). Um besonders hohe Schaltfrequenzen bei niedrigen Verlusten erzielen zu können, ist es zweckmäßig, wenn die Halbleiterschaltelemente aus Galliumnitrid (GaN) oder Siliziumcarbid (SiC)), d.h. einem sog. Wide Band Gap-Material, gebildet sind.

Die Erfindung wird nachfolgend näher anhand von Ausführungsbeispielen in der Zeichnung erläutert. Es zeigen:
- Fig. 1: eine schematische Darstellung einer erfindungsgemäßen Schaltungsanordnung zur Übertragung von Energie, wobei diese beispielhaft aus einem Grundelement und einem Lastelement gebildet ist.
- Fig. 2 bis 4: unterschiedliche Ausgestaltungen eines Lastelements der Schaltungsanordnung, wobei ein Schaltelementpaar des Lastelements weggelassen ist,
- Fig. 5: den zeitlichen Ablauf der Ansteuerung der in Schaltungsanordnung gemäß Fig. 1 enthaltenen Schaltelemente,
- Fig. 6: die Topologie der Schaltungsanordnung aus Fig. 1 in den einzelnen Phasen der Übertragung von Energie,
- Fig. 7: eine schematische Darstellung einer Schaltungsanordnung, die neben dem Grundelement und dem Lastelement ein Zwischenelement umfasst,
- Fig. 8: eine schematische Darstellung einer Schaltungsanordnung, die zwei parallel an das Grundelement angeschlossene Zwischenelemente umfasst, und
- Fig. 9: eine schematische Darstellung einer Schaltungsanordnung, die zwei parallel Energieverteilnetze aus Grundelement und Lastelement umfasst.

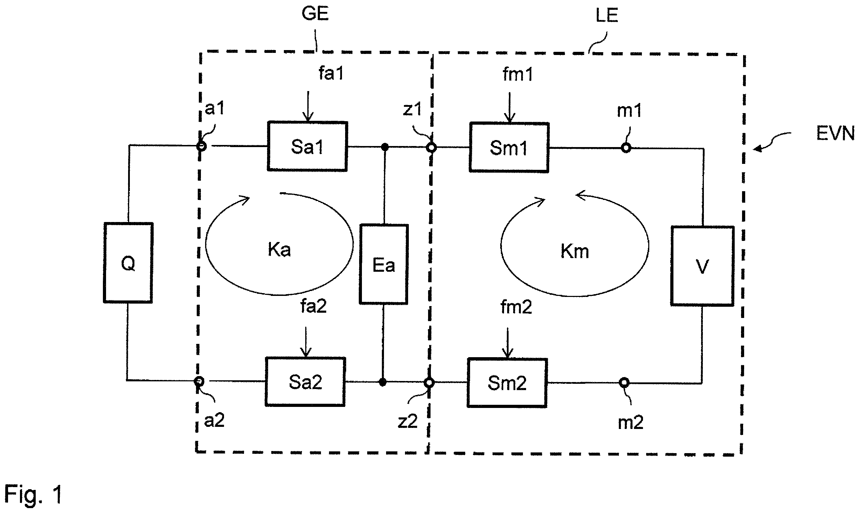

Fig. 1 zeigt eine schematische Darstellung eines einzelnen Energieverteilnetzes EVN einer Schaltungsanordnung zur Übertragung von Energie, wobei das Energieverteilnetz EVN beispielhaft ein Grundelement GE und ein Lastelement LE zur galvanischen Trennung zweier Energiekreise Ka, Km mittels elektronischer Schalter umfasst. Dargestellt ist eine zwischen Klemmen a1 und a2 verschaltete Energiequelle Q, welche z.B. in Form einer Batterie oder allgemein als Strom- oder Spannungsquelle vorliegen kann. Die Energiequelle Q versorgt den ersten Energiekreis Ka des Grundelements GE mit Energie. Ein erster Zwischenkreisenergiespeicher Ea, der zwischen Klemmen z1 und z2 verschaltet ist, ist über zwei erste Schaltelemente Sa1, Sa2 (ein sog. Schaltelementpaar) mit den Klemmen a1, a2 der Energiequelle Q verbunden. Das erste Schaltelement Sa1 ist zwischen der Klemme a1 und dem ersten Zwischenkreisenergiespeicher Ea (d.h. der Klemme z1), das zweite Schaltelement Sa2 zwischen der Klemme a2 und dem ersten Zwischenkreisenergiespeicher Ea (d.h. der Klemme z2) verbunden. Die Klemmen z1 und z2 stellen die Ausgangsklemmen des Grundelements GE dar.

Der zweite Energiekreis Km des Lastelements LE umfasst neben dem ersten Zwischenkreisenergiespeicher Ea des Grundelements zwei zweite Schaltelemente Sm1, Sm2 (ein weiteres Schaltelementpaar) sowie einen Energieverbraucher (Verbraucher) V. Der Verbraucher V ist mit Klemmen m1 und m2 verbunden. Das zweite Schaltelement Sm1 ist zwischen den Klemmen m1 und z1 verschaltet. Das zweite Schaltelement Sm2 ist zwischen den Klemmen z2 und m2 verschaltet. Die Klemmen z1 und z2 können bezüglich des Lastelements LE als Eingangsklemmen betrachtet werden. Sie stellen Knotenpunkte zwischen dem Zwischenkreisenergiespeicher Ea und den jeweiligen ersten und zweiten Schaltelementen dar.

Die ersten Schaltelemente Sa1, Sa2 und die zweiten Schaltelemente Sm1, Sm2 werden von einer nicht näher dargestellten Steuereinrichtung mit einem Steuersignal fa1, fa2 bzw. fm1, fm2 angesteuert, so dass die jeweiligen Schaltelemente entsprechend des Ansteuersignals elektrisch leitend (ein oder ON) oder elektrisch sperrend (aus oder OFF) geschaltet sind. Die Steuersignale fa1 und fa2 entsprechen einander. Ebenso entsprechen die Steuersignale fm1 und fm2 einander.

Die ersten und zweiten steuerbaren Schaltelemente Sa1, Sa2, Sm1, Sm2 sind vorzugsweise Halbleiterschaltelemente vom Typ MOSFET oder HEMT und bestehen insbesondere aus Galliumnitrid (GaN) oder Siliziumcarbid (SiC).

Der erste Zwischenkreisenergiespeicher Ea kann aus einer Kombination von Induktivitäten und Kondensatoren gebildet sein. Der erste Zwischenkreisenergiespeicher Ea kann auch ausschließlich einen oder mehrere Kondensatoren oder eine oder mehrere Induktivitäten umfassen.

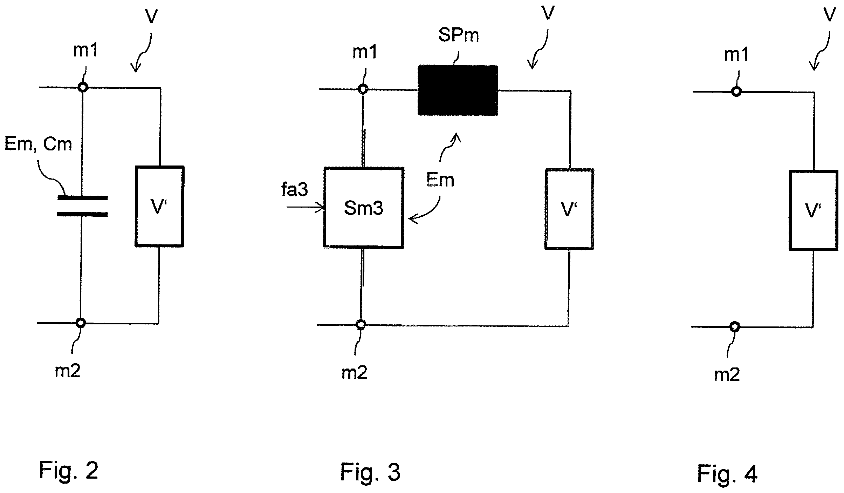

In den Figuren 2 bis 4 sind drei verschiedene Ausführungsbeispiele dargestellt, auf welche Weise der Energieverbraucher V ausgebildet sein kann.

Gemäß der ersten Variante in Fig. 2 ist zusätzlich zu einem Verbraucher V' ein Zwischenkreisenergiespeicher Em in Gestalt eines Kondensators Cm vorgesehen. Der Kondensator Cm ist zwischen den Klemmen m1 und m2 und damit parallel zu dem Verbraucher V' verschaltet ist.

In der zweiten Variante, welche in Fig. 3 dargestellt ist, und ebenfalls zusätzlich zu dem Verbraucher V' einen Zwischenkreisenergiespeicher Em umfasst, ist der Zwischenkreisenergiespeicher Em aus einer Induktivität SPm und einem weiteren zweiten Schaltelement Sm3 gebildet. Während das Schaltelement Sm3 zwischen den Klemmen m1 und m2 verschaltet ist, ist die Serienschaltung aus der Induktivität SPm und dem Verbraucher V' parallel zu dem Schaltelement Sm3 verschaltet. Das Schaltelement Sm3 wird mit einem Steuersignal fa3 beaufschlagt, das bei einem wie in Fig. 1 dargestellten Energieverteilnetz den Steuersignalen fa1 und fa2 entspricht.

In der dritten Variante gemäß Fig. 4 ist kein separates Zwischenkreisenergiespeicherelement vorgesehen. Stattdessen ist lediglich der Verbraucher V (V' entspricht hier dem Verbraucher V in Fig. 1) zwischen den Klemmen m1 und m2 verschaltet.

Während die in den Figuren 2 und 3 dargestellten Varianten einen lückenlosen Betrieb zur Versorgung des Verbrauchers V' ermöglichen, kann bei der in Fig. 4 dargestellten Variante auch ein lückender Betrieb erfolgen. Ein lückender Betrieb, d.h. ein Betrieb, bei dem der Verbraucher nicht kontinuierlich mit Energieversorgt wird, ist im Umfeld von Kraftfahrzeugen beispielsweise beim Betrieb von Sitzheizungen oder Scheibenheizungen ohne Nachteil für den Betrieb des Verbrauchers möglich.

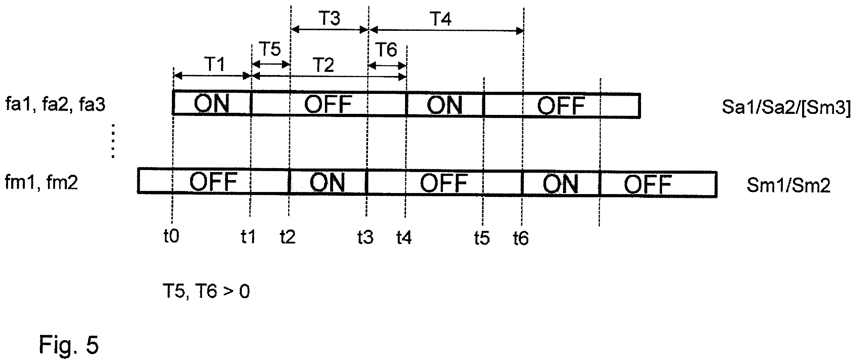

Fig. 5 zeigt für das Ausführungsbeispiel der Fig. 1 ein Schaltschema, mit welchem die ersten und zweiten Schaltelemente Sa1, Sa2, Sm1, Sm2 und das optional vorhandene Schaltelement Sm3 durch die nicht näher dargestellte Steuereinrichtung angesteuert werden, um aufgrund dessen eine galvanische Trennung des Energiekreises Ka von dem Energiekreis Km zu bewerkstelligen. Das Schaltschema zeigt die in Fig. 1 bereits ersichtlichen Schaltsignale fa1, fa2 und fm1, fm2 sowie - bei Vorhandensein des Schaltelements Sm3 (vgl. Fig.3) - das Steuersignal fa3. Das Schaltsignal fa1, fa2, fa3 dient zur Ansteuerung der ersten Schaltelemente Sa1, Sa2 und des optional vorhandenen Schaltelements Sm3. Das Schaltsignal fa1, fa2 dient zur Ansteuerung der zweiten Schaltelemente Sm1, Sm2.

In einem ersten Zeitraum T1, welcher von einer Zeit t0 bis t1 andauert, werden die Schaltelemente Sa1, Sa2, Sm3 durch das Schaltsignal fa1, fa2, fa3 ein, d.h. leitend, geschaltet. Dies ist in der Figur durch "ON" gekennzeichnet. In einem zweiten Zeitraum T2, welcher von der Zeit t1 bis zu einer Zeit t4 reicht, werden die Schaltelemente Sa1, Sa2, Sm3 aus bzw. nicht leitend geschaltet. Dies ist durch "OFF" gekennzeichnet. Der zweite Zeitraum T2 dauert im gezeigten Ausführungsbeispiel länger als der erste Zeitraum T1. Anschließend wiederholt sich der beschriebene Schaltvorgang.

In entsprechender Weise werden die zweiten Schaltelemente Sm1, Sm2 während eines dritten Zeitraumes T3, welcher von der Zeit t2 bis zu t3 reicht, ein bzw. leitend geschaltet ("ON"). In einem vierten Zeitraum T4, der von t3 bis t6 dauert, werden die zweiten Schaltelemente Sm1, Sm2 aus bzw. sperrend geschaltet ("OFF"). Anschließend wiederholt sich der beschriebene Schaltvorgang.

Lediglich beispielhaft sind der erste Zeitraum T1 und der dritte Zeitraum T3, in denen die ersten Schaltelemente Sa1, Sa2 (und optional das Schaltelement Sm3) und die zweiten Schaltelemente Sm1, Sm2 leitend geschaltet sind, gleich lang. Gleiches gilt für den zweiten und den vierten Zeitraum T2, T4. Die ersten Schaltelemente Sa1, Sa2 (und optional das Schaltelement Sm3) und die zweiten Schaltelemente Sm1, Sm2 werden somit jeweils alternierend leitend und sperrend geschaltet, wobei zu einem gegebenen Zeitpunkt entweder nur die ersten Schaltelemente Sa1, Sa2 (und das optionale Schaltelement Sm3) oder nur die zweiten Schaltelemente Sm1, Sm2 leitend geschaltet sind. Der erste und der dritte Zeitraum T1, T3 sind dabei über einen ersten Pausenzeitraum T5 voneinander zeitlich getrennt. Zwischen dem dritten und dem ersten Zeitraum T3, T1 liegt ein zweiter Pausenzeitraum T6, der von t3 bis t4 dauert, usw. Der erste und der zweite Pausenzeitraum T5, T6 sind vorzugsweise gleich lang, wobei dies nicht zwingend ist. Dadurch, dass der erste und der zweite Pausenzeitraum T5, T6 jeweils größer null sind, ist eine galvanische Trennung zwischen dem ersten Energiekreis Ka und dem zweiten Energiekreis Km sichergestellt. Die Dauer der Pausenzeiträume T5, T6 ist vorzugsweise derart bemessen, dass im Falle von Induktivitäten in den Zwischenkreisenergiespeichern Ea, Em keine Spannungsüberhöhung auftreten kann, welche zu einer Zerstörung der ersten und/oder zweiten Schaltelemente Sa1, Sa2, Sm3, Sm1, Sm2 führen kann. Es ist zu beachten, dass die dargestellten Zeiträume T1 bis T6 auch von dem gezeigten Ausführungsbeispiel abweichen können. Wichtig ist, dass T5 und T6 größer als Null sind, damit die galvanische Trennung gewährleistet ist.

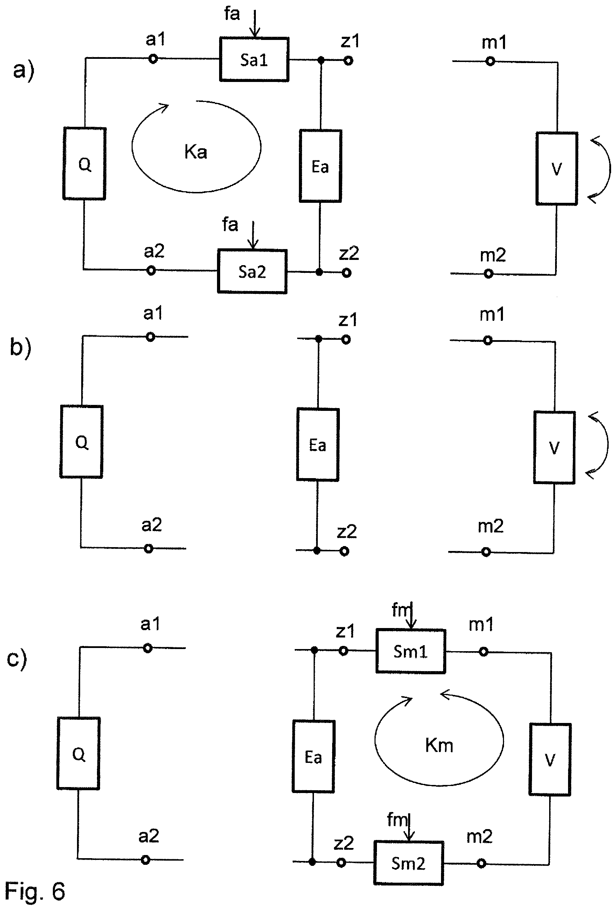

Fig. 6 zeigt die Funktionsweise der in Fig. 1 dargestellten Schaltungsanordnung in einem zeitlichen Ablauf. Gemäß dem in Fig. 5 dargestellten Schaltschema werden zunächst (vgl. Schritt a)) die ersten Schaltelemente Sa1, Sa2 (und, sofern vorhanden, das Schaltelement Sm3) mittels des Steuersignals fa, das den Steuersignalen fa1, fa2, fa3 entspricht, leitend geschaltet. Hierdurch erfolgt eine Ladung des ersten Zwischenkreisenergiespeichers Ea aus der Energiequelle Q. Die in Fig. 6a) gezeigte Situation spielt sich somit während des ersten Zeitraums T1 ab.

In Fig. 6b) ist der erste Pausenzeitraum T5 dargestellt. Währenddessen sind durch die Steuersignale fa und fm (wobei fm den Steuersignalen fm1, fm2) entspricht, die Schaltelemente Sa1, Sa2, Sm1, Sm2 sperrend geschaltet, so dass der erste Zwischenkreisenergiespeicher Ea weder eine elektrische Verbindung zu dem ersten Energiekreis Ka noch zu dem zweiten Energiekreis K2 aufweist.

Während des in Fig. 6c) dargestellten dritten Zeitraums T3 sind die ersten Schaltelemente Sa1, Sa2 und gegebenenfalls das Schaltelement Sm3 sperrend geschaltet, während die zweiten Schaltelemente Sm1, Sm2 durch das Steuersignal fm leitend geschaltet sind. Der erste Zwischenkreisenergiespeicher Ea kann sich nun entladen, während der optional vorhandene Zwischenkreisenergiespeicher Em (vgl. die Ausführungsbeispiele des Verbrauchers gemäß Fig. 2 und 3) geladen wird und hierbei eine Versorgung des Verbrauchers V sicherstellen kann (für das Beispiel in Fig. 1 im Zeitraum T1).

In der nicht näher dargestellten nächsten Phase, welche dem zweiten Pausenzeitraum T6 entspricht, gilt die in Fig. 6b) gezeigte Situation, in der keines der Schaltelemente leitend geschaltet ist. Eine Versorgung des Verbrauchers erfolgt nun aus dem zweiten Zwischenkreisenergiespeicher. Dies ist durch den Pfeil rechts des Verbrauchers V angedeutet. Ebenso wird der Verbraucher, wenn dieser gemäß einer der Figuren 2 oder 3 ausgestaltet ist, während des ersten Zeitraums T1 (vgl. Fig. 6a)) durch die in dem zweiten Zwischenkreisenergiespeicher Em enthaltene Energie versorgt, was ebenfalls durch den rechts des Energieverbrauchers V dargestellten Pfeil angedeutet ist.

In Fig. 6 wurde der Energietransport von der Energiequelle Q zu dem Verbraucher V in Richtung des ersten Energiekreises Ka zu dem Energiekreis Km dargestellt. Ebenso ist ein Energietransport von dem Energiekreis Km zu dem ersten Energiekreis Ka möglich, wobei auch hier das Grundprinzip der galvanischen Trennung eingehalten werden kann.

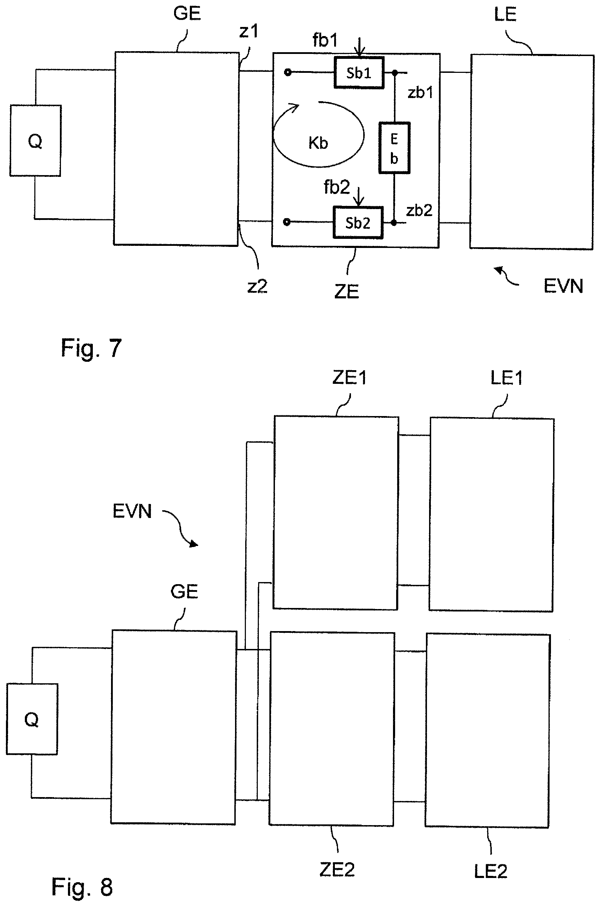

Die beschriebene Schaltungsanordnung kann dahingehend modifiziert werden, dass das Energieverteilnetz zusätzlich zu dem Grundelement GE und dem Lastelement LE ein oder mehrere Zwischenelemente ZE aufweist. In dem in Fig. 7 dargestellten Ausführungsbeispiel ist ein solches Zwischenelement ZE zwischen dem Grundelement GE und dem Lastelement LE angeordnet. Der Übersichtlichkeit halber sind in Fig. 7 nur die Schaltelemente des Zwischenelements dargestellt, die Anordnung der Komponenten des Grundelements GE und des Lastelement LE entspricht der von Fig. 1.

Ein Zwischenelement ZE weist zur Ausbildung eines zweiten Zwischenkreises Kb einen zweiten Zwischenkreisenergiespeicher Eb und zwei steuerbare Schaltelemente Sb1, Sb2 auf. Die Schaltelemente Sb1, Sb2 werden mittels Steuersignalen fb1, fb2 gesteuert, wobei fb1 und fb2in der Regel gleich sind. Der Zwischenkreisenergiespeicher Eb ist zwischen Anschlüssen zb1 und zb2 verschaltet. Das Schaltelement Sb1 ist zwischen dem Anschluss z1 (d.h. einem Ausgangsanschluss des Grundelements GE) und dem Anschluss zb1 verschaltet. Das Schaltelement Sb2 ist zwischen dem Anschluss z2 (d.h. einem Ausgangsanschluss des Grundelements GE) und dem Anschluss zb2 verschaltet.

Die Steuereinrichtung ist dazu ausgebildet, die Verbindung zwischen der Energiequelle Q und dem Energieverbraucher V durch selektive Ansteuerung der Schalterpaare des Grundelements GE, des Zwischenelements ZE und des Lastelements LE im Betrieb derart leitend und sperrend zu schalten, dass zu jedem gegebenen Zeitpunkt mindestens eines der Schalterpaare sperrt, so dass immer eine galvanische Trennung zwischen der Energiequelle und dem Energieverbraucher gegeben ist. Hierdurch kann dann durch das selektive Schalten der Schalterpaare ein Energiepaket von der Energiequelle Q über den ersten Zwischenkreisspeicher Ea und den weiteren Zwischenkreisspeicher Eb an den Energieverbraucher übertragen werden.

In einer weiteren nicht dargestellten Abwandlung könnte zwischen dem Grundelement GE und dem Lastelement LE eine Mehrzahl an Zwischenelementen verschaltet sein, so dass die Energiekreise Kettenartig "in Serie" miteinander verschaltet sind.

Fig. 8 zeigt ein weiteres Ausführungsbeispiel eines Energieverteilnetzwerks EVN, bei dem zwei Zwischenelemente ZE1, ZE2 parallel an das Grundelement GE angeschlossen sind. Die Zwischenelemente ZE1, ZE2 sind entsprechend der Beschreibung zu Fig. 7 ausgebildet. An jedes der Zwischenelemente ZE1, ZE2 ist ferner ein jeweiliges Lastelement LE1, LE2 angeschlossen.

In einer Abwandlung, könnte jeder der Stränge (die Fig. 8 zeigt zwei Stränge GE-ZE1-LE1 und GE-ZE2-LE2) auch mehrere Zwischenelemente ZE umfassen, welche wahlweise seriell und/oder parallel miteinander verschaltet sein können.

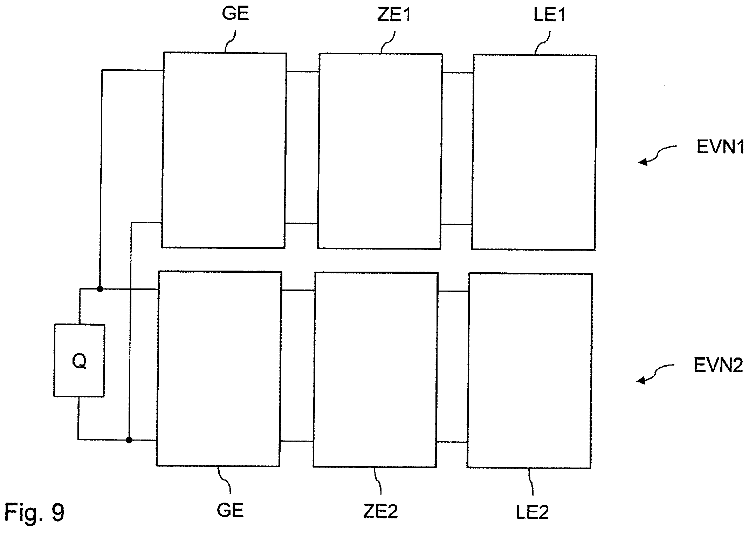

Fig. 9 zeigt ein Ausführungsbeispiel, bei dem die Schaltungsanordnung zwei parallel an die Energiequelle Q angeschlossene Energieverteilnetze EVN1 und EVN2 umfasst. Jedes Energieverteilnetz EVN1, EVN2 ist lediglich beispielhaft, wie in Fig. 7 dargestellt, ausgebildet. Es versteht sich, dass jedes Energieverteilnetz EVN1 auch aus einer der oben beschriebenen Abwandlungen bestehen könnte. In dieser Variante ist es zweckmäßig, wenn die ersten Zwischenkreisenergiespeicher der Grundelemente der zwei Energieverteilnetze EVN1, EVN2 zu unterschiedlichen Zeitpunkten durch die Steuervorrichtung mit der Energiequelle Q elektrisch verbunden sind. Hierdurch wird eine Vergleichmäßigung der Belastung der Energiequelle Q ermöglicht. Die Vergleichmäßigung ist umso größer, je mehr Energieverteilnetze parallel verschaltet werden.

Das erfindungsgemäße Vorgehen ermöglicht die Realisierung einer galvanischen Trennung durch hocheffiziente Halbleiterschaltelemente bei hoher Schaltfrequenz. Die Schaltungsanordnung wandelt hierbei Spannung oder Strom zwischen dem Ein- und Ausgang wahlfrei zueinander. Die Schaltungsanordnung trennt zwei elektrische Energiekreise voneinander, welche wahlweise als Eingangs- oder Ausgangskreis konfiguriert werden können. Die Übertragung der Energie basiert hierbei auf mindestens zwei Energiespeichern, die keinen Transformator darstellen. Obwohl nicht zwingend, ist die Verwendung von magnetischen Energiespeichern bevorzugt.

Die Anordnung kann unabhängig von einer Topologie, z.B. der bekannten T-Form oder H-Form, erfolgen. Die Energieübertragung erfolgt hierbei zwischen den Zwischenkreisenergiespeichern in klar definierten separaten Zeitschritten. Die Energiekreise sind hierbei zu jedem Zeitpunkt elektrisch getrennt und somit auch galvanisch entkoppelt.

### Bezugszeichenliste

- GE: Grundelement
- LE: Lastelement
- LE1: Lastelement
- LE2: Lastelement
- ZE: Zwischenelement
- ZE1: Zwischenelement
- ZE2: Zwischenelement
- EVN: Energieverteilnetz
- EVN1: Energieverteilnetz
- EVN1: Energieverteilnetz
- Q: Energiequelle
- Ea: erster Zwischenkreisenergiespeicher
- Eb: zweiter Zwischenkreisenergiespeicher
- V: Verbraucher
- Sa1: erstes Schaltelement
- Sa2: erstes Schaltelement
- Sm1: zweites Schaltelement
- Sm2: zweites Schaltelement
- Sm3: Schaltelement
- Sb1: drittes Schaltelement
- Sb2: drittes Schaltelement
- Ka: Energiekreis
- Km: Energiekreis
- V: Verbraucher
- V': Verbraucher
- fa1: Ansteuersignal für erstes Schaltelement Sa1
- fa2: Ansteuersignal für erstes Schaltelement Sa2
- fb1: Ansteuersignal für erstes Schaltelement Sb1
- fb2: Ansteuersignal für erstes Schaltelement Sb2
- fm1: Ansteuersignal für erstes Schaltelement Sm1
- fm2: Ansteuersignal für erstes Schaltelement Sm2
- Em: Energiespeicher
- SPm: Induktivität
- Cm: Kondensator
- a1: Anschluss
- a2: Anschluss
- z1: Anschluss
- z2: Anschluss
- zb1: Anschluss
- zb2: Anschluss
- m1: Anschluss
- m2: Anschluss
- T1: erster Zeitraum
- T2: zweiter Zeitraum
- T3: dritter Zeitraum
- T4: vierter Zeitraum
- T5: erster Pausenzeitraum
- T6: zweiter Pausenzeitraum
- t0: Zeitpunkt
- t1: Zeitpunkt
- t2: Zeitpunkt
- t3: Zeitpunkt
- t4: Zeitpunkt

## Patentansprüche

1. Schaltungsanordnung zur Übertragung von Energie, umfassend:
- eine Energiequelle (Q);
- eine Steuereinrichtung;
- zumindest ein Grundelement (GE)
- zwei oder mehrere Energieverteilnetze (EVN), wobei jedes Energieverteilnetz (EVN) zumindest ein Lastelement (LE) umfasst, wobei
- das Grundelement (GE) einen ersten Zwischenkreisenergiespeicher (Ea) umfasst, der zur Ausbildung eines ersten Energiekreises (Ka) über zwei erste steuerbare Schaltelemente (Sa1, Sa2) durch die Steuereinrichtung mit der Energiequelle (Q) elektrisch verbindbar oder von dieser trennbar ist, und
- die Lastelemente (LE) jeweils einen Energieverbraucher (V) umfassen, der zur Ausbildung eines zweiten Energiekreises (Km) über zwei zweite steuerbare Schaltelemente (Sm1, Sm2) durch die Steuereinrichtung mit den Anschlüssen des ersten Zwischenkreisenergiespeichers (Ea) elektrisch verbindbar oder von diesem trennbar ist;
- wobei die Steuereinrichtung dazu ausgebildet ist, die ersten und zweiten Schaltelemente (Sa1, Sa2; Sm1, Sm2) des jeweiligen Energieverteilnetzes (EVN) derart anzusteuern, dass Energie von der Energiequelle (Q) zu dem Energieverbraucher (V), oder umgekehrt, übertragen wird, wobei zu keinem Zeitpunkt eine direkte leitende Verbindung zwischen der Energiequelle (Q) und dem Energieverbraucher (V) besteht;
- wobei die Energieverteilnetze (EVN) jeweils zumindest ein Zwischenelement (ZE) aufweisen, welches oder welche zwischen dem Grundelement (GE) und dem zumindest einen Lastelement (LE) verschaltet sind, wobei jedes Zwischenelement (ZE) einen zweiten Zwischenkreisenergiespeicher (Eb) umfasst, wobei jeder zweite Zwischenkreisenergiespeicher (Eb) zur Ausbildung eines jeweiligen zweiten Energiekreises (Kb) über zwei dritte steuerbare Schaltelemente (Sb1, Sb2) durch die Steuereinrichtung mit den beiden Anschlüssen des jeweils vorhergehenden ersten oder zweiten Zwischenkreisenergiespeichers (Ea, Eb) oder mit dem jeweils nachfolgenden zweiten Zwischenkreisenergiespeicher (Eb) oder dem jeweiligen Energieverbraucher (V) elektrisch verbindbar oder von diesem trennbar ist;
- und wobei die Zwischenelemente (ZE) parallel an das Grundelement (GE) oder ein vorhergehendes Zwischenelement (ZE) angeschlossen sind.

2. Schaltungsanordnung nach einem der vorhergehenden Ansprüche, bei der dem ersten Zwischenkreisenergiespeicher (Ea) ein Schaltelement parallel geschaltet ist.

3. Schaltungsanordnung nach Anspruch 2, bei der zumindest einem der zweiten Zwischenkreisenergiespeicher (Eb) ein jeweiliges Schaltelement parallel geschaltet ist.

4. Schaltungsanordnung nach einem der vorhergehenden Ansprüche, bei der zumindest zwei Energieverteilnetze (EVN) parallel mit der Energiequelle (Q) verschaltet sind.

5. Schaltungsanordnung nach Anspruch 4, bei der die ersten Zwischenkreisenergiespeicher (Ea) der Grundelemente (GE) der zumindest zwei Energieverteilnetze (EVN) zu unterschiedlichen Zeitpunkten mit der Energiequelle (Q) elektrisch verbunden sind.

6. Schaltungsanordnung nach einem der vorhergehenden Ansprüche, bei der die Steuereinrichtung dazu ausgebildet ist, die Verbindung zwischen der Energiequelle (Q) und dem Energieverbraucher (V) durch selektive Ansteuerung der Schalterpaare (Sa1, Sa2; Sb1, Sb2; Sm1, Sm2) des Grundelements (GE), des optionalen Zwischenelements (ZE) und des Lastelements (LE) im Betrieb derart leitend und sperrend zu schalten, dass zu jedem gegebenen Zeitpunkt (t) mindestens eines der Schalterpaare (Sa1, Sa2; Sb1, Sb2; Sm1, Sm2) sperrt.

7. Schaltungsanordnung nach einem der vorhergehenden Ansprüche, bei der die Steuereinrichtung dazu ausgebildet ist, die Verbindung zwischen der Energiequelle (Q) und dem Energieverbraucher (V) durch selektive Ansteuerung der Schalterpaare (Sa1, Sa2; Sb1, Sb2; Sm1, Sm2) des Grundelements (GE), des optionalen Zwischenelements (ZE) und des Lastelements (LE) derart leitend und sperrend zu schalten, dass ein Energiepaket von der Energiequelle (Q) über den ersten Zwischenkreisspeicher (Ea) und den oder die optionalen zweiten Zwischenkreisspeicher (Eb) an den Energieverbraucher, oder umgekehrt, übertragbar ist.

8. Schaltungsanordnung nach einem der vorhergehenden Ansprüche, bei der durch dynamische Anpassung der Ansteuerung der Schalterpaare (Sa1, Sa2; Sb1, Sb2; Sm1, Sm2) des Grundelements (GE), des optionalen Zwischenelements (ZE) und des Lastelements (LE) durch die Steuereinrichtung die Richtung des Energietransports zwischen den Energiekreisen (Ka, Kb) beliebig umkehrbar ist.

9. Schaltungsanordnung nach einem der vorhergehenden Ansprüche, bei der der erste Zwischenkreisenergiespeicher (Ea) und/oder der zumindest eine zweite optionale Zwischenkreisenergiespeicher (Eb) jeweils zumindest eine Induktivität und/oder zumindest einen Kondensator umfasst.

10. Schaltungsanordnung nach einem der vorhergehenden Ansprüchen, bei der das Lastelement (LE) zusätzlich zu dem Energieverbraucher (V) zumindest einen Energiespeicher (Em) umfasst.

11. Schaltungsanordnung nach Anspruch 10, bei der der Energiespeicher (Em) des Lastelements (LE) eine Induktivität ist, die in Reihe mit dem Verbraucher (V) verschaltet ist, wobei die Reihenschaltung aus der Energiespeicherinduktivität und dem Verbraucher (V) parallel zu einem vierten Schaltelement (Sm3) verschaltet ist.

12. Schaltungsanordnung nach Anspruch 10, bei der der Energiespeicher (Em) des Lastelements (LE) ein Ladungsspeicher ist, der parallel zu dem Verbraucher (V) verschaltet ist.

13. Schaltungsanordnung nach einem der vorhergehenden Ansprüche, bei der die ersten, zweiten und dritten Schaltelemente (Sa1, Sa2; Sb1, Sb2; Sm1, Sm2) Halbleiterschaltelemente, insbesondere MOSFETs oder HEMTs, sind.

14. Schaltungsanordnung nach einem der vorhergehenden Ansprüche, bei der die ersten, zweiten und dritten Schaltelemente (Sa1, Sa2; Sb1, Sb2; Sm1, Sm2) aus Wide Band Gap-Materialen, insbesondere GaN oder SiC, aufgebaut sind.

## Claims

1. A circuit assembly for transferring energy, comprising:
- an energy source (Q);
- a control device;
- at least one basic element (GE);
- two or more energy distribution networks (EVN), wherein each energy distribution network (EVN) comprises at least one load element (LE), wherein
- the basic element (GE) comprises a first intermediate circuit energy store (Ea) which is electrically connectable to or disconnectable from the energy source (Q) via two first controllable switch elements (Sa1, Sa2) by the control device to form a first energy circuit (Ka), and
- each load element (LE) comprises an energy consumer (V) which is electrically connectable to or disconnectable from the connections of the first intermediate circuit energy store (Ea) by the control device via two second controllable switch elements (Sm1, Sm2) to form a second energy circuit (Km),
- wherein the control device is designed to actuate the first and second switch elements (Sa1, Sa2; Sm1, Sm2) of the particular energy distribution network (EVN) such that energy is transferred from the energy source (Q) to the energy consumer (V) or vice versa, wherein at no time is there a direct conductive connection between the energy source (Q) and the energy consumer (V);
- wherein the energy distribution networks (EVN) each have at least one intermediate element (ZE) which is or are connected between the basic element (GE) and the at least one load element (LE), wherein each intermediate element (ZE) comprises a second intermediate circuit energy store (Eb), wherein each second intermediate circuit energy store (Eb) is electrically connectable to or disconnectable from the two connections of the preceding first or second intermediate circuit energy store (Ea, Eb), or the subsequent second intermediate circuit energy store (Eb), or the energy consumer (V) by the control device via two third controllable switch elements (Sb1, Sb2) to form a second energy circuit (Kb);
- and wherein the intermediate elements (ZE) are connected in parallel with the basic element (GE) or a preceding intermediate element (ZE).

2. A circuit assembly according to the preceding claim, in which a switch element is connected in parallel with the first intermediate circuit energy store (Ea).

3. A circuit assembly according to claim 2, in which a switch element is connected in parallel with at least one of the second intermediate circuit energy stores (Eb) each.

4. A circuit assembly according to any one of the preceding claims, in which at least two energy distribution networks (EVN) are connected in parallel with the energy source (Q).

5. A circuit assembly according to claim 4, in which the first intermediate circuit energy stores (Ea) of the basic elements (GE) of the at least two energy distribution networks (EVN) are electrically connected to the energy source (Q) at different times.

6. A circuit assembly according to any one of the preceding claims, in which the control device is designed to switch the connection between the energy source (Q) and the energy consumer (V) by selective actuation of the switch pairs (Sa1, Sa2; Sb1, Sb2; Sm1, Sm2) of the basic element (GE), the optional intermediate element (ZE) and the load element (LE) during operation to be conducting and blocking such that, at any given instant (t), at least one of the switch pairs (Sa1, Sa2; Sb1, Sb2; Sm1, Sm2) is blocking.

7. A circuit assembly according to any one of the preceding claims, in which the control device is designed to switch the connection between the energy source (Q) and the energy consumer (V) by selective actuation of the switch pairs (Sa1, Sa2; Sb1, Sb2; Sm1, Sm2) of the basic element (GE), the optional intermediate element (ZE) and the load element (LE) to be conducting and blocking such that an energy packet is transferrable from the energy source (Q) via the first intermediate circuit store (Ea) and the optional second intermediate circuit store or stores (Eb) to the energy consumer, or vice versa.

8. A circuit assembly according to any one of the preceding claims, in which the direction of energy transport between the energy circuits (Ka, Kb) is reversible as desired by dynamic matching of the actuation of the switch pairs (Sa1, Sa2; Sb1, Sb2; Sm1, Sm2) of the basic element (GE), the optional intermediate element (ZE) and the load element (LE) by the control device.

9. A circuit assembly according to any one of the preceding claims, in which the first intermediate circuit energy store (Ea) and/or the at least one second optional intermediate circuit energy store (Eb) comprises in each case at least one inductor and/or at least one capacitor.

10. A circuit assembly according to any one of the preceding claims, in which the load element (LE) comprises at least one energy store (Em) in addition to the energy consumer (V).

11. A circuit assembly according to claim 10, in which the energy store (Em) of the load element (LE) is an inductor which is connected in series with the consumer (V), wherein the series circuit formed of the energy store inductor and the consumer (V) is connected in parallel with a fourth switch element (Sm3).

12. A circuit assembly according to claim 10, in which the energy store (Em) of the load element (LE) is a charge store which is connected in parallel with the consumer (V).

13. A circuit assembly according to any one of the preceding claims, in which the first, second and third switch elements (Sa1, Sa2; Sb1, Sb2; Sm1, Sm2) are semiconductor switch elements, more especially MOSFETs or HEMTs.

14. A circuit assembly according to any one of the preceding claims, in which the first, second and third switch elements (Sa1, Sa2; Sb1, Sb2; Sm1, Sm2) are constructed from wide-bandgap materials, more especially GaN or SiC.

## Revendications

1. Agencement de circuit permettant un transfert d'énergie comprenant:
- une sortie d'énergie (Q),
- un dispositif de commande,
- au moins d'un élément de base (GE),
- deux ou un plus grand nombre de réseaux de distribution d'énergie (EVN), chaque réseau de distribution d'énergie (EVN) comportant au moins un élément de charge (LE), dans lequel :
- l'élément de base (GE) comporte un premier accumulateur d'énergie de circuit intermédiaire (Ea) qui, pour former un premier circuit d'énergie (Ka) peut être relié électriquement par l'intermédiaire de deux premiers éléments de commutation (Sa1, Sa2) commandables par le dispositif de commande avec la source d'énergie (Q) ou être séparé de celle-ci, et
- les éléments de charge (LE) comportent chacun un consommateur d'énergie (V) qui, pour former un second circuit d'énergie (Km) peut être relié électriquement par l'intermédiaire de deux seconds éléments de commutation (Fm1, Fm2) commandables par le dispositif de commande avec les bornes de connexion du premier accumulateur d'énergie de circuit intermédiaire (Ea) ou en être séparé,
- le dispositif de commande étant réalisé pour permettre de commander les premiers et les seconds éléments de commutation (Sa1, Sa2, Sm1, Sm2) du réseau de distribution d'énergie (EVN) respectif de sorte que de l'énergie puisse être transférée de la source d'énergie (Q) vers le consommateur d'énergie (V) ou inversement, et, à aucun instant une liaison conductrice directe entre la source d'énergie (Q) et le consommateur d'énergie (V) n'étant présente,
- les réseaux de distribution d'énergie (EVN) comportent chacun au moins un élément intermédiaire (ZE) qui est branché entre l'élément de base (GE) et l'élément de charge (LE), chaque élément intermédiaire (ZE) comprenant un second accumulateur d'énergie de circuit intermédiaire (Eb), chaque second accumulateur de circuit intermédiaire (Eb) pouvant pour former un second circuit d'énergie respectif (Kb), être relié électriquement par l'intermédiaire de deux troisièmes éléments de commutation (Sb 1, Sb2) commandables par le dispositif de commande avec les deux bornes de connexion du premier ou du second accumulateur d'énergie intermédiaire respectivement précédent (Ea, Eb) ou avec le second accumulateur d'énergie de circuit intermédiaire respectivement suivant (Eb) ou avec le consommateur d'énergie respectif (V) ou en être séparé, et
- les éléments intermédiaires (ZE) étant connectés en parallèle à l'élément de base (GE) ou à un élément intermédiaire précédent (ZE).

2. Agencement de commutation conforme à la revendication précédente,
dans lequel un élément de commutation est branché en parallèle sur le premier accumulateur d'énergie de circuit intermédiaire (Ea).

3. Agencement de commutation conforme à la revendication 2,
dans lequel un élément de commutation respectif est branché en parallèle sur au moins l'un des seconds accumulateurs d'énergie de circuit intermédiaire (Eb).

4. Agencement de commutation conforme à l'une des revendications précédentes,
dans lequel au moins deux réseaux de distribution d'énergie (EVN) sont branchés en parallèle avec la source d'énergie (Q).

5. Agencement de commutation conforme à la revendication 4,
dans lequel les premiers accumulateurs d'énergie de circuit intermédiaire (Ea) des éléments de base (GE) des deux réseaux de distribution d'énergie (EVN) sont branchés électriquement sur la source d'énergie (Q) à des instants différents.

6. Agencement de commutation conforme à l'une des revendications précédentes,
dans lequel
le dispositif de commande est réalisé de façon à commuter en fonctionnement la liaison entre la source d'énergie (Q) et le consommateur d'énergie (V) par commande sélective des paires de commutateurs (Sa1, Sa2, Sb1, Sb2, Sm1, Sm2) de l'élément de base (GE) de l'élément intermédiaire optionnel (ZE) et de l'élément de charge (LE) pour la rendre bloquante ou passante de sorte que, à chaque instant (t) donné au moins l'une des paires de commutateurs (Sa1, Sa2, Sb1, Sb2, Sm1, Sm2) soient bloquées.

7. Dispositif de commutation conforme à l'une des revendications précédentes,
dans lequel le dispositif de commande est réalisé de façon à commuter la liaison entre la source d'énergie (Q) et le consommateur d'énergie (V) par commande sélective des paires de commutateurs (Sa1, Sa2, Sb1, Sb2, Sm1, Sm2) de l'élément de base (GE) de l'élément intermédiaire optionnel (ZE) et de l'élément de charge (LE) pour la rendre passante ou bloquante de sorte qu'un bloc d'énergie puisse être transféré de la source d'énergie (Q) par l'intermédiaire du premier accumulateur de circuit intermédiaire (Ea) et du second accumulateur de circuit intermédiaire optionnel (Eb) vers le consommateur d'énergie ou inversement.

8. Agencement de branchement conforme à l'une des revendications précédentes,
dans lequel une adaptation dynamique de la commande des paires de commutateurs (Sa1, Sa2, Sb1, Sb2, Sm1, Sm2) de l'élément de base (GE), de l'élément intermédiaire optionnel (ZE), et de l'élément de charge (LE), par l'intermédiaire du dispositif de commande, permet d'inverser de façon quelconque la direction du transfert d'énergie entre les circuits d'énergie (Ka, Kb).

9. Agencement de branchement conforme à l'une des revendications précédentes,
dans lequel le premier accumulateur d'énergie de circuit intermédiaire (Ea) et/ou le second accumulateur d'énergie de circuit intermédiaire optionnel (Eb) comporte(nt) au moins une inductance et/ou au moins un condensateur.

10. Agencement de branchement conforme à l'une des revendications précédentes,
dans lequel l'élément de charge (LE) comprend en plus du consommateur d'énergie (V) au moins un accumulateur d'énergie (Em).

11. Agencement de branchement conforme à la revendication 10,
dans lequel l'accumulateur d'énergie (Em) de l'élément de charge (LE) est une inductance qui est branchée en série avec le consommateur (V), le branchement en série de l'inductance de l'accumulateur d'énergie et du consommateur (V) étant branché en parallèle sur un quatrième élément de commutation (Sm3).

12. Agencement de branchement conforme à la revendication 10,
dans lequel l'accumulateur d'énergie (Em) de l'élément de charge (LE) est un accumulateur de charge qui est branché en parallèle sur le consommateur (V).

13. Agencement de branchement conforme à l'une des revendications précédentes,
dans lequel les premiers seconds et troisièmes éléments de commutation (Sa1, Sa2, Sb1, Sb2, Sm1, Sm2) sont des éléments de commutation à semi-conducteur, en particulier des éléments MOSFET ou HEMT.

14. Agencement de commutation conforme à l'une des revendications précédentes,
dans lequel les premiers, seconds et troisièmes éléments de commutation (Sa1, Sa2, Sb1, Sb2, Sm1, Sm2) sont réalisés en des matériaux à large bande interdite (Wide Band Gap) en particulier en GaN ou SiC.
